# EUROPÄISCHE PATENTSCHRIFT

(11) **EP 1 318 930 B1**
(45) Veröffentlichungstag und Bekanntmachung des Hinweises auf die Patenterteilung: **24.11.2004**
(21) Anmeldenummer: 01964912.8
(22) Anmeldetag: 16.08.2001
(51) Int. Cl.: B60S 1/24

(54) **WISCHERANTRIEB**
WIPER DRIVE
COMMANDE D'ESSUIE-GLACE

(30) Priorität: 14.09.2000 DE 10045573
(43) Veröffentlichungstag der Anmeldung: 18.06.2003
(73) Patentinhaber: ROBERT BOSCH GMBH, 70442 Stuttgart (DE)
(72) Erfinder: RAPP, Juergen, 77886 Lauf (DE)
(86) Internationale Anmeldenummer: PCT/DE2001/003151
(87) Internationale Veröffentlichungsnummer: WO 2002/022409

(56) Entgegenhaltungen:
- EP-A- 0 806 330
- DE-A- 10 011 842
- DE-A- 19 744 906
- FR-A- 2 580 567
- US-A- 5 287 585

## Beschreibung

### Stand der Technik

Die Erfindung geht von einem Wischerantrieb nach dem Oberbegriff des Anspruchs 1 aus.

Aus der EP 0 781 691 A1 ist ein Wischerantrieb bekannt, der einen Motor mit Getriebe und eine auf einer Abtriebswelle aufgesetzte Motorkurbel enthält. Diese treibt über ein Hebelgetriebe einen Scheibenwischer an. Diese Anordnung wird für Rundläufer- und Reversiermotoren verwendet, wobei das Hebelgetriebe an die Antriebsart angepasst werden muss. Bei Reversiermotoren besteht die Gefahr, dass er bei einem Defekt in der Steuerung über die Endlagen der Schwenkbewegung hinausfährt. Die mit ihm gekoppelten Scheibenwischer würden ebenfalls über ihren Wischbereich hinausfahren und Schäden an der Fahrzeugkarosserie verursachen und selbst beschädigt werden.

Die DE 197 44 906 A zeigt eine Wischvorrichtung mit einer Wischwinkelbegrenzung. Zum Begrenzen des Wischwinkels ist am Gehäuse des Wischerlagers wenigstens ein Anschlag mit einer Anschlagfläche starr befestigt und an der Lagerschwinge ein Anschlagmittel vorgesehen.

Ferner hat sich der Anmelder unter Bezugnahme auf DE 100 11 842 A1 freiwillig eingeschränkt und einen gesonderten Patentanspruch für Deutschland vorgelegt.

### Vorteile der Erfindung

Nach der Erfindung wirkt die Motorkurbel auf der Abtriebswelle des Getriebemotors mit Anschlägen zusammen, die auf der Wischerplatine im Bereich der Motorkurbel vorgesehen und um einen Drehwinkel (ϕ) voneinander entfernt sind, der geringfügig größer ist als der Schwenkwinkel der Motorkurbel, so dass die Anschläge ein Überschwingen über die Umkehrpositionen des Scheibenwischers verhindern. Somit kann die Motorkurbel im Normalbetrieb ohne jede Beeinträchtigung arbeiten, während sie bei einem Defekt in der Steuerung allenfalls an einem der Anschläge zur Anlage kommt, der ein weiteres Überschwingen verhindert. Dadurch wird vermieden, dass bei einem Defekt in der Steuerung des reversierbaren Wischermotors der Scheibenwischer und/oder die Fahrzeugkarosserie beschädigt werden.

Es ist sinnvoll, die Anschläge im Bereich der Motorkurbel anzuordnen, weil dadurch im Falle eines Defekts das Gestänge des Hebelgetriebes von Blockierkräften unbelastet ist.

### Zeichnung

Weitere Vorteile ergeben sich aus der folgenden Zeichnungsbeschreibung. In der Zeichnung sind Ausführungsbeispiele der Erfindung dargestellt.

Es zeigen:

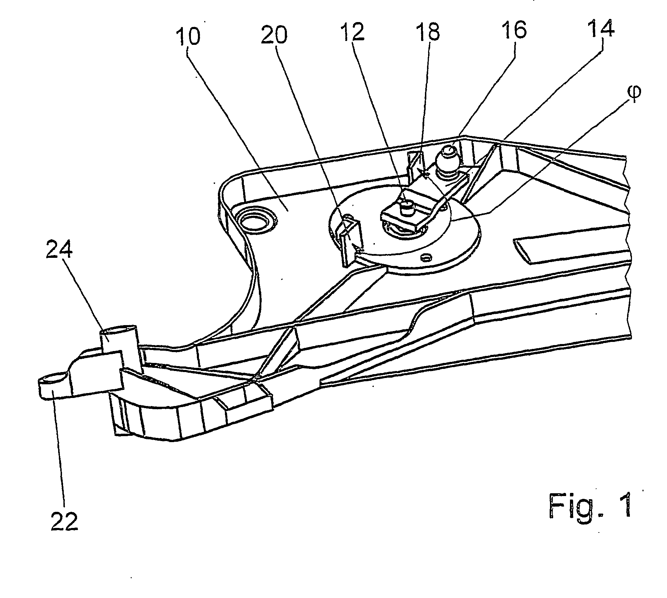

- Fig. 1: eine perspektivische Teilansicht einer Wischerplatine mit einer Motorkurbel und
- Fig. 2: eine perspektivische Teilansicht einer Wischerplatine mit einem Wischerlager.

### Beschreibung der Ausführungsbeispiele

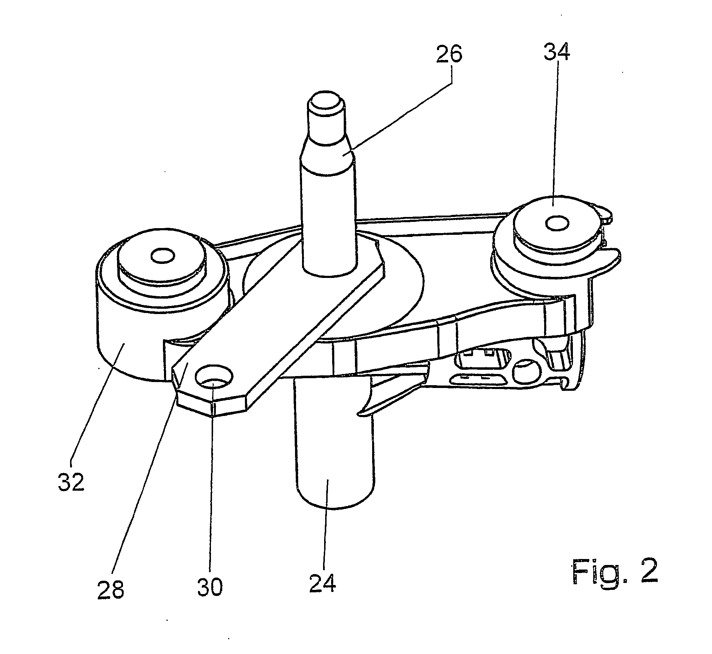

An einer Wischerplatine 10 ist ein reversierbarer Wischermotor befestigt, auf dessen Abtriebswelle 12 eine Motorkurbel 14 sitzt. An dem freien Ende der Motorkurbel 14 wird über einen kugelförmigen Gelenkzapfen 16 ein nicht näher dargestelltes Hebelgetriebe angekoppelt, das die Motorkurbel 14 mit einer Kurbel 28 an einer Antriebswelle 26 für einen ebenfalls nicht näher dargestellten Scheibenwischer triebmäßig verbindet (Fig. 2). Die Antriebswelle 26 ist in einem Wischerlager 24 in der Nähe eines Befestigungsauges 22 der Wischerplatine 10 gelagert.

Im Bereich der Motorkurbel 14 sind auf der Wischerplatine 10 zwei Anschläge 18 und 20 angeordnet. Sie.sind um einen Drehwinkel ϕ voneinander entfernt, der etwas größer ist als der Schwenkwinkel der Motorkurbel 14, so dass die Anschläge 18, 20 den Normalbetrieb nicht stören, aber verhindern, dass bei einer defekten Steuerung des Wischermotors der Scheibenwischer nennenswert über seine Umkehrlagen hinaus schwingen kann.

Bei der Variante nach Fig. 2 sind im Bereich der Kurbel 28, die eine Bohrung 30 zur Aufnahme eines Gelenkzapfens besitzt, zwei Anschläge 32 und 34 vorgesehen, von denen einer als Befestigungselement der Wischerplatine 10 ausgebildet sein kann.

## Patentansprüche (Patentansprüche für folgende(n) Vertragsstaat(en): ES, FR, GB, IT)

1. Wischerantrieb mit einem reversierbaren Getriebemotor, der an einer Wischerplatine (10) befestigt ist und auf dessen Abtriebswelle (12) eine Motorkurbel (14) sitzt, die über mindestens ein Gelenk (16) mit einem Hebelgetriebe verbunden ist, das mindestens einen Scheibenwischer antreibt, **dadurch gekennzeichnet, dass** die Motorkurbel (14) auf der Abtriebswelle (12) des Getriebemotors mit Anschlägen (18, 20, 32, 34) zusammenwirkt, die auf der Wischerplatine (10) im Bereich der Motorkurbel (14) vorgesehen und um einen Drehwinkel (ϕ) voneinander entfernt sind, der geringfügig größer ist als der Schwenkwinkel der Motorkurbel (14), sodass die Anschläge (18, 20, 32, 34) ein Überschwingen über die Umkehrpositionen des Scheibenwischers verhindern.

2. Wischerantrieb nach Anspruch 1, **dadurch gekennzeichnet, dass** ein Anschlag (34) als Befestigungselement ausgebildet ist.

## Patentansprüche (Patentansprüche für folgende(n) Vertragsstaat(en): DE)

1. Wischerantrieb mit einem reversierbaren Getriebemotor, der an einer Wischerplatine (10) befestigt ist und auf dessen Abtriebswelle (12) eine Motorkurbel (14) sitzt, die über mindestens ein Gelenk (16) mit einem Hebelgetriebe verbunden ist, das mindestens einen Scheibenwischer antreibt, **dadurch gekennzeichnet, dass** die Motorkurbel (14) auf der Abtriebswelle (12) des Getriebemotors mit Anschlägen (18, 20, 32, 34) zusammenwirkt, die auf der Wischerplatine (10) im Bereich der Motorkurbel (14) vorgesehen und um einen Drehwinkel (ϕ) voneinander entfernt sind, der geringfügig größer ist als der Schwenkwinkel der Motorkurbel (14), sodass die Anschläge (18, 20, 32, 34) ein Überschwingen über die Umkehrpositionen des Scheibenwischers verhindern, wobei ein Anschlag (34) als Befestigungselement ausgebildet ist.

## Claims (Claims for the following Contracting State(s): ES, FR, GB, IT)

1. Wiper drive having a reversible gear motor, which is fastened on a wiper mounting plate (10) and has, sitting on its output shaft (12), a motor crank (14) which is connected via at least one joint (16) to a lever mechanism which drives at least one wiper, **characterized in that** the motor crank (14) interacts on the output shaft (12) of the gear motor with stops (18, 20, 32, 34) which are provided on the wiper mounting plate (10) in the region of the motor crank (14) and are remote from one another by an angle of rotation (ϕ) which is slightly larger than the pivoting angle of the motor crank (14), so that the stops (18, 20, 32, 34) prevent it from swinging beyond the reversal positions of the wiper.

2. Wiper drive according to Claim 1, **characterized in that** a stop (34) is designed as a fastening element.

## Claims (Claims for the following Contracting State(s): DE)

1. Wiper drive having a reversible gear motor, which is fastened on a wiper mounting plate (10) and has, sitting on its output shaft (12), a motor crank (14) which is connected via at least one joint (16) to a lever mechanism which drives at least one wiper, **characterized in that** the motor crank (14) interacts on the output shaft (12) of the gear motor with stops (18, 20, 32, 34) which are provided on the wiper mounting plate (10) in the region of the motor crank (14) and are remote from one another by an angle of rotation (ϕ) which is slightly larger than the pivoting angle of the motor crank (14), so that the stops (18, 20, 32, 34) prevent it from swinging beyond the reversal positions of the wiper, a stop (34) being designed as a fastening element.

## Revendications (Revendications pour l'(les) Etat(s) contractant(s) suivant(s): ES, FR, GB, IT)

1. Entraînement d'essuie-glace comprenant un moto-réducteur réversible fixé à une platine d'essuie-glace (10) et sur l'arbre de sortie (12) duquel se situe une manivelle motorisée (14) qui est reliée par au moins une articulation (16) à un engrenage à levier qui entraîne au moins un essuie-glace,
**caractérisé en ce que**
la manivelle motorisée (14) coopère sur l'arbre de sortie (12) du moto-reducteur avec des butées (18, 20, 32, 34) prévues sur la platine d'essuie-glace (10) dans la zone de la manivelle motorisée (14) et espacées les unes des autres selon un angle de rotation (ϕ) qui est légèrement plus grand que l'angle de pivotement de la manivelle motorisée (14), de telle sorte que les butées (18, 20, 32, 34) empêchent un dépassement des positions d'inversion de l'essuie-glace.

2. Entraînement d'essuie-glace selon la revendication 1,
**caractérisé en ce que**
l'une des butées (34) présente la forme d'un élément de fixation.

## Revendications (Revendications pour l'(les) Etat(s) contractant(s) suivant(s): DE)

1. Entraînement d'essuie-glace comprenant un moto-réducteur réversible fixé à une platine d'essuie-glace (10) et sur l'arbre de sortie (12) duquel se situe une manivelle motorisée (14) qui est reliée par au moins une articulation (16) à un engrenage à levier qui entraîne au moins un essuie-glace,
**caractérisé en ce que**
la manivelle motorisée (14) coopère sur l'arbre de sortie (12) du moto-reducteur avec des butées (18, 20, 32, 34) prévues sur la platine d'essuie-glace (10) dans la zone de la manivelle motorisée (14) et espacées les unes des autres selon un angle de rotation (ϕ) qui est légèrement plus grand que l'angle de pivotement de la manivelle motorisée (14), de telle sorte que les butées (18, 20, 32, 34) empêchent un dépassement des positions d'inversion de l'essuie-glace.
